(19) Europäisches Patentamt
European Patent Office
Office européen des brevets

(11) EP 4 672 350 A1

(12) EUROPEAN PATENT APPLICATION
published in accordance with Art. 153(4) EPC

(43) Date of publication:
31.12.2025 Bulletin 2026/01

(51) International Patent Classification (IPC):
H01M 4/13 $^{(2010.01)}$  H01M 10/0569 $^{(2010.01)}$
H01M 10/0525 $^{(2010.01)}$

(21) Application number: 23962071.9

(22) Date of filing: 28.12.2023

(52) Cooperative Patent Classification (CPC):
Y02E 60/10

(86) International application number:
PCT/CN2023/142774

(87) International publication number:
WO 2025/129749 (26.06.2025 Gazette 2025/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.12.2023 CN 202311780889

(71) Applicant: Huizhou Liwinon New Energy
Technology Co., Ltd.
Huizhou, Guangdong 516100 (CN)

(72) Inventors:
• JIANG, Shiquan
Huizhou, Guangdong 516100 (CN)
• YANG, Jie
Huizhou, Guangdong 516100 (CN)
• ZENG, Li
Huizhou, Guangdong 516100 (CN)
• GAO, Yunlei
Huizhou, Guangdong 516100 (CN)
• YU, Zilong
Huizhou, Guangdong 516100 (CN)

(74) Representative: Appleyard Lees IP LLP
15 Clare Road
Halifax HX1 2HY (GB)

(54) **NEGATIVE ELECTRODE SHEET, BATTERY, PREPARATION METHOD, AND USE**

(57) A negative electrode sheet, a battery, a preparation method, and a use, relating to the technical field of lithium-ion batteries. The structure of the negative electrode sheet comprises: a current collector, and an active material layer which is arranged on the surface of the current collector. The number of the active material layers is greater than or equal to 1, and pore slots are formed in the surface of at least one active material layer, the depth H of each pore slot and the thickness T of the active material layer satisfy the following relationship: $1/3T < H \leq 2/3T$; and the compaction density of the active material layer is P, wherein P satisfies the following relationship: $1.55 \text{ g/cm}^3 \leq P \leq 1.75 \text{ g/cm}^3$. When the active material layer has high compaction density, the wettability balance between the negative electrode sheet and an electrolyte is achieved, it is ensured that the battery has high energy density gains, and the battery also has good liquid retention capability and superior high-temperature cycling life and low-temperature cycling life.

Figure 1

EP 4 672 350 A1

Description

## TECHNICAL FIELD

The present disclosure relates to the field of lithium-ion battery technology, particularly to a negative electrode sheet, a battery, and a preparation method and use thereof.

## BACKGROUND

Lithium-ion batteries are a common type of rechargeable battery widely used in mobile devices, electric vehicles, and renewable energy storage systems, which store and release electrical energy through electrochemical reactions involving lithium ions between the positive electrode and the negative electrode. The main components of a lithium-ion battery include a positive electrode, a negative electrode, an electrolyte, and separator. The positive electrode is typically composed of lithium compounds (such as lithium manganese oxide, lithium cobalt oxide, or lithium iron phosphate), while the negative electrode commonly uses graphite materials. The electrolyte is a conductive solution or polymer film used for ionic conduction. The separator serves to separate the positive electrode and the negative electrode to prevent short circuits. The working principle of a lithium-ion battery involves the intercalation and deintercalation of lithium ions between the positive electrode and the negative electrode during charging and discharging. When the battery is charged, lithium ions are released from the positive electrode, travel through the electrolyte to the negative electrode, and intercalate within it. When the battery is discharged, lithium ions deintercalate from the negative electrode and move back to the positive electrode. This intercalation and deintercalation process is reversible, allowing the lithium-ion battery to be charged and discharged multiple times. Lithium-ion batteries have many advantages, such as high energy density, long cycle life, low self-discharge rate, and minimal memory effect. They are also lighter and easier to maintain compared to other types of rechargeable batteries, and have high voltage stability.

As market demand for battery performance rising, high-performance lithium-ion batteries not only need to possess high energy density but also superior long cycle life. One common approach for enhancing the energy density of lithium-ion batteries is to increase the compaction densities of the positive electrode sheet and the negative electrode sheet. However, increasing the compaction density has a significant negative impact on the liquid absorption capacities and the liquid absorption time of the electrode sheets and separators, leading to insufficient liquid absorption amount in the battery cell and causing adverse phenomena such as battery cycle plunge in the later.

To improve electrolyte wetting, methods such as high temperature standing, vacuum standing after liquid injection, or complex formation processes are typically used. Additionally, some battery companies solve the difficulties of liquid absorption in electrode sheets and separators by reducing the viscosity of the electrolyte and adding novel wetting agents to increase the liquid absorption capacity of the electrode sheets and separators within the battery cell, thereby reducing absorption time. While increasing the content of low-melting-point, low-viscosity solvents in the electrolyte can improve the wettability of the electrode sheets, it can adversely affect the high temperature performance of the battery. Conversely, if the viscosity of the electrolyte increases, the high temperature performance of the battery may improve, but the penetration ability weakens, leading to insufficient wetting and resulting in the product being unusable.

Therefore, how to achieve suitable wettability between the electrode sheets and the electrolyte, as well as enhance the liquid retention capacity and high temperature cycling life and low temperature cycling life of the battery, has become an urgent technical problem to be solved.

## SUMMARY

The first technical problem to be solved by the present disclosure is: to provide a negative electrode sheet.

The second technical problem to be solved by the present disclosure is: to provide a battery.

To solve the first technical problem, the technical solution used in the present disclosure is:

a negative electrode sheet, the negative electrode sheet has a structure including:

a current collector;

an active material layer arranged on a surface of the current collector;

the quantity of active material layer is greater than or equal to 1, and a surface of at least one active material layer is provided with a hole groove;

a depth H of the hole groove and a thickness T of the active material layer satisfy the following relationship:

$$1/3\mathrm{T} < \mathrm{H} \leq 2/3\mathrm{T};$$

the active material layer has a compaction density P satisfying the following relationship: $1.55\,\mathrm{g/cm^3} \leq \mathrm{P} \leq 1.75\,\mathrm{g/cm^3}$.

According to an embodiment of the present disclosure, one of the technical solution has at least one of the following advantages or beneficial effects:

In the case where the active material layer has a high compaction density, the present disclosure further balances the wettability between the negative electrode sheet and the electrolyte, ensuring that the battery achieves high energy density benefits while also possessing good liquid retention capability and superior high and low temperature cycling life.

Specifically:

A high compaction density of the active material layer can effectively enhance the energy density of the battery, but a high compaction density will reduce the gaps in the active material layer, increasing the difficulty of the electrolyte wetting, which can lead to poor wetting and a decrease in the liquid retention capability of the battery. To this end, in the present disclosure, the active material layer on the surface of the negative electrode sheet is provided with a hole groove to facilitate the circulation of electrolyte for improving the wettability, promoting liquid retention in the battery, and forming a pathway for rapid lithium-ion diffusion, effectively alleviating the wetting and lithium precipitation issues associated with high compaction density electrode sheets. Furthermore, by setting the depth H of the hole groove and the thickness T of the active material layer, the circulation of the electrolyte can be regulated, balancing the wettability between the negative electrode sheet and the electrolyte can be balanced, high energy density in the battery can be ensured, and good liquid retention capability and superior high and low temperature cycling life can be maintained.

According to one embodiment of the present disclosure, the active material layer is arranged on the upper and/or lower surface of the current collector.

According to one embodiment of the present disclosure, a volume fraction of the hole groove in the active material layer is $\eta$, and $\eta$ satisfies the following relationship: $1\% \leq \eta \leq 5\%$. According to the technical solution of the present disclosure, the hole grooves are provided on the active material layer on the surface of the negative electrode sheet to facilitate the circulation of electrolyte, and improve the wettability. However, if the volume fraction of the hole groove is too high, it can affect the N/P ratio of the positive electrode and negative electrode. If the volume fraction is too low, the wettability of the electrolyte will be inadequate, thereby obstructing the lithium-ion transport pathway. Therefore, it is necessary to strictly limit the volume fraction of the hole groove in the active material layer.

According to one embodiment of the present disclosure, the hole groove in the active material layer has a drilling width R satisfying the following relationship: $50\,\mu\mathrm{m} \leq \mathrm{R} \leq 140\,\mu\mathrm{m}$.

According to one embodiment of the present disclosure, the hole groove in the active material layer has a spacing L satisfying the following relationship: $1.0\,\mathrm{mm} \leq \mathrm{L} \leq 2.5\,\mathrm{mm}$.

According to one embodiment of the present disclosure, an angle between the hole groove in the active material layer and the negative electrode sheet is $\theta$, and $\theta$ satisfies the following relationship: $85° \leq \theta \leq 95°$. The angle of the hole groove relative to the negative electrode sheet, the spacing of the hole groove, the drilling width of the hole groove, the volume fraction of the hole groove, and the depth H of the hole groove all affect the regulation of electrolyte flowing through the hole groove, thereby influencing liquid retention stability.

According to one embodiment of the present disclosure, a material of the negative electrode sheet includes at least one of graphite and graphite doped with silicon-carbon.

To solve the second technical problem, the technical solution used in the present disclosure is:

a battery, includes a positive electrode sheet, a separator, an electrolyte, and the negative electrode sheet.

According to one embodiment of the present disclosure, components of the electrolyte include a non-aqueous solvent, a lithium salt, and an additive, wherein the non-aqueous solvent comprises a first organic solvent and a second organic solvent; a mass fraction of the first organic solvent in the electrolyte is $W_1$, and $W_1$ satisfies the following relationship: $30\,\mathrm{wt.\%} \leq W_1 \leq 45\,\mathrm{wt.\%}$; a mass fraction of the second organic solvent in the electrolyte is $W_2$, and $W_2$ satisfies the following relationship: $15\,\mathrm{wt.\%} \leq W_2 \leq 40\,\mathrm{wt.\%}$; and $W_2 \leq W_1 \leq 3W_2$.

According to one embodiment of the present disclosure, the electrolyte has a viscosity $\omega$ satisfying the following relationship: $0.4\,\mathrm{mPa\cdot s} \leq \omega \leq 2\,\mathrm{mPa\cdot s}$. The viscosity $\omega$ refers to the viscosity of the electrolyte at 25°C. A viscosity that is too low can deteriorate high temperature performance, while an increased viscosity can adversely affect low temperature performance and also impact the wetting effect and liquid retention stability of the battery. By setting the ratio of the first solvent to the second solvent, the viscosity of the electrolyte can be regulated. In conjunction with the effect of the hole groove in the negative electrode sheet, the viscosity and liquid retention stability of the electrolyte can be appropriately increased while ensuring good wetting, thus balancing the high and low temperature performance of the battery. Consequently, the present disclosure reduces the requirement of high compaction density on electrolyte permeability, broadens the selection variety and ratio window for the solvent and the additive, and significantly enhances the overall performance of the battery.

According to one embodiment of the present disclosure, a compaction density of the negative electrode sheet is P; and the negative electrode sheet comprises an active material layer, and the active material layer is provided with a hole groove, the hole groove has a volume fraction $\eta$; and P, $\eta$, $W_1$, and $\omega$ satisfy the following relationship: $2.8 \leq (P*\omega)/(10*=*W_1) \leq 50$. To ensure that the negative electrode sheet and the electrolyte have stable liquid retention capability while ensuring the high and low temperature performance of the battery, the compaction density of the negative electrode sheet, the volume fraction of the hole groove, and the solvent of the electrolyte need to satisfy the above relationships. When the compaction density is high, there are fewer gaps between various materials in the active material layer, thereby having great difficulty in the wetting and the stability of liquid retention of electrolyte. A low viscosity of the electrolyte is beneficial for wetting, but in high temperature environments, the reactivity of the materials in the active material layer also increases, leading to more side reactions with the electrolyte, thereby resulting in increased byproducts and heat, posing significant safety risks. The presence of hole groove on the surface of the electrode sheet promotes good liquid retention stability while providing pathways for rapid lithium-ion transport. Therefore, by providing a hole groove on the surface of the electrode sheet under high compaction density, the viscosity of the electrolyte can be appropriately increased, endowing the electrode sheet with good liquid retention stability and superior performance in high or low temperature.

According to one embodiment of the present disclosure, the negative electrode sheet has a pressure relief compaction density $\beta$; and the pressure relief compaction density $\beta$ of the negative electrode sheet, the compaction density P of the negative electrode sheet, and the viscosity $\omega$ of the electrolyte satisfy the following relationship: $0.05 \leq \omega * (P - \beta) / P \leq 0.23$. By satisfying the above relationship, the negative electrode sheet can further enhance the liquid retention stability of the electrode sheet. Furthermore, in the above relationship, various materials in the active material layer are in good contact, and in cooperation with the hole groove in the active material layer on the surface of the positive electrode sheet, the lithium-ion transmission obstacle can be further reduced, thereby helping to decrease the heat generated during the charging and discharging processes of the battery, and improving the high and low temperature performance of the battery.

According to one embodiment of the present disclosure, the first organic solvent includes at least one of carbonate organic solvent and carboxylate organic solvent; the second organic solvent includes at least one of sulfur-based solvent, fluorinated solvent, sulfone-based solvent, and nitrile-based solvent.

According to one embodiment of the present disclosure, the first organic solvent includes at least one of ethylene carbonate, propylene carbonate, $\gamma$-butyrolactone L, dimethyl carbonate, diethyl carbonate, and methyl ethyl carbonate.

According to one embodiment of the present disclosure, a mass fraction of the first organic solvent in the electrolyte is $W_1$, and 30 wt.% $\leq W_1 \leq$ 45 wt.%.

According to one embodiment of the present disclosure, the second organic solvent includes at least one of $CF_3SO_2N(CH_2CH_3)(CH_3)$, $CF_3SO_2N(CH_2CH_3)_2$, $CF_3SO_2N(CH_3)_2$, $CF_3CF_2SO_2N(CH_3)_2$, sulfite esters, butene sulfite esters, methoxyethyl methyl sulfone, tetramethylene sulfone, succinonitrile, pivalonitrile, fluorinated dioxolane, pyrrolidines, piperidines, and ammonium solvents.

According to one embodiment of the present disclosure, a mass fraction of the second organic solvent in the electrolyte is $W_2$, and 15 wt.% $\leq W_2 \leq$ 40 wt.%.

According to one embodiment of the present disclosure, the electrolyte in the battery further includes lithium salt, which includes at least one of LiFSI, LiTFSI, LiBOB, and $LiPO_2F_2$.

According to one embodiment of the present disclosure, a mass fraction of the lithium salt in the electrolyte is 10 wt.% to 20 wt.%.

According to one embodiment of the present disclosure, the electrolyte in the battery further includes an additive, where the additive includes at least one of 1,3-propanesultone, 1,3-propylene sultone, 1,3,6-hexanetricarbonitrile, 1,3-propanesultone, ethylene sulfate, and 1,2-bis(cyanoethoxy)ethane.

According to one embodiment of the present disclosure, a mass percentage of the additive in the electrolyte is 10 wt.% to 20 wt.%.

According to one embodiment of the present disclosure, a material of the positive electrode sheet includes at least one of lithium cobalt oxide, ternary materials, and lithium-rich material.

According to one embodiment of the present disclosure, a material of the separator includes at least one of polyethylene, polypropylene, and polyvinylidene fluoride.

Other features and advantages of the present disclosure would be illustrated in the below description, and would become apparent from the description or be understood through the implementation of the present disclosure.

**BRIEF DESCRIPTION OF DRAWINGS**

The aforementioned and/or additional aspects and advantages of the present disclosure would become apparent and easily understood from the description of the examples in conjunction with the accompanying drawings, in which:

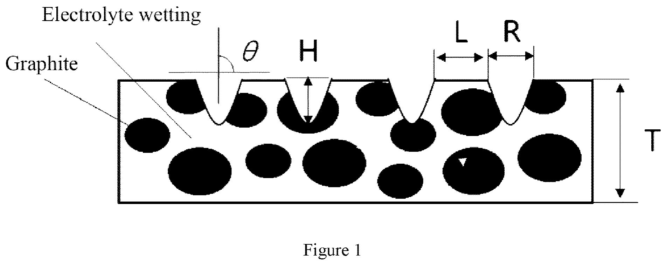

Figure 1 is a schematic structural diagram of the active material layer in Example 1.

**DETAILED DESCRIPTION**

In the description of the present disclosure, terms such as "first", "second" etc., are used merely for the purpose of distinguishing technical features and should not be interpreted as indicating or implying relative importance or as implicitly indicating the number of technical features referred to or the order of the technical features indicated.

In the description of the present disclosure, it should be understood that the orientation or position relationship related to orientation description such as "up", "down", etc., is based on the orientation or position relationship shown in the examples and are intended merely for the convenience of describing the present disclosure and simplifying the description. They do not indicate or imply that the devices or components must have specific orientations or be constructed and operated in specific orientations. Therefore, they should not be understood as limitations of the present disclosure.

The terms "preferably", "more preferably", etc., used in the present disclosure refer to embodiments of the disclosure that may provide certain beneficial effects in certain situations. However, in the same or other situations, other embodiments may also be preferred. Furthermore, the mention of one or more preferred embodiments does not imply that other embodiments are unavailable or that it is intended to exclude other embodiments from the scope of the present disclosure.

When a numerical range is disclosed herein, the range is considered continuous and includes both the minimum value and maximum value of the range, as well as every value between the minimum value and the maximum value. Additionally, when the range refers to integers, it includes every integer between the minimum value and the maximum value of the range. Moreover, when multiple ranges are provided to describe features or characteristics, these ranges may be combined. In other words, unless otherwise specified, all ranges disclosed herein should be understood to include any and all subranges included therein.

The technical solutions of the present disclosure would be described clearly and completely below with reference to examples, it is evident that the described examples are merely a part of the examples of the present disclosure and not all of the examples. Based on the examples of the present disclosure, other examples obtained by those skilled in the art without creative work belong to the protection scope of the present disclosure.

The reagents, methods, and equipment used in the present disclosure, unless otherwise specified, are conventional reagents, methods, and equipment in the technical field.

In the examples and comparative examples, the first organic solvent is ethylene carbonate, the second organic solvent is methoxyethyl methyl sulfone, the lithium salt is $LiPO_2F_2$, and the additive is 1,3-propylene sultone.

In the examples and comparative examples, the viscosity $\omega$ of the electrolyte refers to the viscosity of the electrolyte at 25°C.

**Example 1**

A negative electrode sheet had a structure including:

a current collector;
an active material layer, which was arranged on a surface of the current collector; the active material layer had a schematic structural diagram shown in Figure 1;
the number of the active material layer was 1, and hole grooves were provided on the surface of the active material layer;
a depth H of the hole groove and a thickness T of the active material layer satisfied the following relationship:

$$1/3T < H \leq 2/3T;$$

the active material layer had a compaction density P of 1.6 g/cm$^3$.

The volume fraction of the hole groove in the active material layer was $\eta$, and $\eta$ was of 1%.

A battery included a positive electrode sheet, a separator, an electrolyte, and the above-mentioned negative electrode sheet.

A preparation method of the positive electrode sheet included the following steps:

an active material $LiCoO_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:

a surface of PE was coated with a ceramic mixture to serve as the separator.

A preparation process of the negative electrode sheet included the following steps:

a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.6 g/cm$^3$ and then slit; a surface of the active material layer was drilled by a laser drilling equipment with a volume fraction of the hole groove being 1%, to obtain the negative electrode sheet.

A preparation process of the electrolyte included the following steps:

40 wt.% of the first organic solvent, 30 wt.% of the second organic solvent, 15 wt.% of lithium salt, and 15 wt.% of additive were mixed and dissolved to prepare the electrolyte.

The electrolyte had a viscosity of 0.806 mPa·s.

A preparation process of the battery included the following steps:

The above-mentioned positive electrode sheet, separator, and negative electrode sheet were wound to prepare a bare cell, which was then packaged and injected with the electrolyte to produce the finished battery.

## Example 2

The difference between Example 2 and Example 1 included: the volume fraction of the hole groove was different. In Example 1, the volume fraction of the hole groove was 1%, while in Example 2, the volume fraction of the hole groove was 3%.

A negative electrode sheet had a structure including:

a current collector;
an active material layer, which was arranged on the surface of the current collector;
the number of the active material layer was 1, and hole grooves were provided on the surface of the active material layer;
a depth H of the hole groove and a thickness T of the active material layer satisfied the following relationship:

$$1/3T < H \leq 2/3T;$$

the active material layer had a compaction density P of 1.6 g/cm$^3$.

The volume fraction of the hole groove in the active material layer was $\eta$, and $\eta$ was of 3%.

A battery included a positive electrode sheet, a separator, an electrolyte, and the above-mentioned negative electrode sheet.

A preparation method of the positive electrode sheet included the following steps:

an active material LiCoO$_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:

a surface of PE was coated with a ceramic mixture to serve as the separator.

A preparation process of the negative electrode sheet included the following steps:

a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.6 g/cm$^3$ and then slit; a surface of the active material layer was drilled by a laser drilling equipment with a volume fraction of the hole groove being 3%, to obtain the negative electrode sheet.

A preparation process of the electrolyte included the following steps:

40 wt.% of the first organic solvent, 30 wt.% of the second organic solvent, 15 wt.% of lithium salt, and 15 wt.% of additive were mixed and dissolved to prepare the electrolyte.

The electrolyte had a viscosity of 0.806 mPa·s.

A preparation process of the battery included the following steps:

The above-mentioned positive electrode sheet, separator, and negative electrode sheet were wound to prepare a bare cell, which was then packaged and injected with the electrolyte to produce the finished battery.

### Example 3

The difference between Example 3 and Example 1 included: the volume fraction of the hole groove was different. In Example 1, the volume fraction of the hole groove was 1%, while in Example 3, the volume fraction of the hole groove was 5%.

A negative electrode sheet had a structure including:

a current collector;
an active material layer, which was arranged on the surface of the current collector;
the number of the active material layer was 1, and hole grooves were provided on the surface of the active material layer;
a depth H of the hole groove and a thickness T of the active material layer satisfied the following relationship:

$$1/3\,T < H \le 2/3\,T;$$

the active material layer had a compaction density P of 1.6 g/cm$^3$.

The volume fraction of the hole groove in the active material layer was $\eta$, and $\eta$ was of 5%.

A battery included a positive electrode sheet, a separator, an electrolyte, and the above-mentioned negative electrode sheet.

A preparation method of the positive electrode sheet included the following steps:

an active material LiCoO$_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:

a surface of PE was coated with a ceramic mixture to serve as the separator.

A preparation process of the negative electrode sheet included the following steps:

a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.6 g/cm$^3$ and then slit; a surface of the active material layer was drilled by a laser drilling equipment with a volume fraction of the hole groove being 5%, to obtain the negative electrode sheet.

A preparation process of the electrolyte included the following steps:

40 wt.% of the first organic solvent, 30 wt.% of the second organic solvent, 15 wt.% of lithium salt, and 15 wt.% of additive were mixed and dissolved to prepare the electrolyte.

The electrolyte had a viscosity of 0.806 mPa·s.

A preparation process of the battery included the following steps:

The above-mentioned positive electrode sheet, separator, and negative electrode sheet were wound to prepare a bare cell, which was then packaged and injected with the electrolyte to produce the finished battery.

### Example 4

The difference between Example 4 and Example 2 included: the compaction density was different. In Example 2, the compaction density was 1.6 g/cm$^3$, while in Example 4, the compaction density was 1.55 g/cm$^3$.

A negative electrode sheet had a structure including:

a current collector;
an active material layer, which was arranged on the surface of the current collector;
the number of the active material layer was 1, and hole grooves were provided on the surface of the active material layer;
a depth H of the hole groove and a thickness T of the active material layer satisfied the following relationship:

$$1/3\,T < H \le 2/3\,T;$$

the active material layer had a compaction density P of 1.55 g/cm$^3$.

The volume fraction of the hole groove in the active material layer was $\eta$, and $\eta$ was of 3%.

A battery included a positive electrode sheet, a separator, an electrolyte, and the above-mentioned negative electrode sheet.

A preparation method of the positive electrode sheet included the following steps:

an active material $LiCoO_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:

a surface of PE was coated with a ceramic mixture to serve as the separator.

A preparation process of the negative electrode sheet included the following steps:

a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.55 g/cm$^3$ and then slit; a surface of the active material layer was drilled by a laser drilling equipment with a volume fraction of the hole groove being 3%, to obtain the negative electrode sheet.

A preparation process of the electrolyte included the following steps:

40 wt.% of the first organic solvent, 30 wt.% of the second organic solvent, 15 wt.% of lithium salt, and 15 wt.% of additive were mixed and dissolved to prepare the electrolyte.

The electrolyte had a viscosity of 0.806 mPa·s.

A preparation process of the battery included the following steps:

The above-mentioned positive electrode sheet, separator, and negative electrode sheet were wound to prepare a bare cell, which was then packaged and injected with the electrolyte to produce the finished battery.

## Example 5

The difference between Example 5 and Example 2 included: the compaction density was different. In Example 2, the compaction density was 1.6 g/cm$^3$, while in Example 5, the compaction density was 1.65 g/cm$^3$.

A negative electrode sheet had a structure including:

a current collector;

an active material layer, which was arranged on the surface of the current collector;

the number of the active material layer was 1, and hole grooves were provided on the surface of the active material layer;

a depth H of the hole groove and a thickness T of the active material layer satisfied the following relationship:

$$1/3\,T < H \le 2/3\,T;$$

the active material layer had a compaction density P of 1.65 g/cm$^3$.

The volume fraction of the hole groove in the active material layer was $\eta$, and $\eta$ was of 3%.

A battery included a positive electrode sheet, a separator, an electrolyte, and the above-mentioned negative electrode sheet.

A preparation method of the positive electrode sheet included the following steps:

an active material $LiCoO_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:

a surface of PE was coated with a ceramic mixture to serve as the separator.

A preparation process of the negative electrode sheet included the following steps:

a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.65 g/cm$^3$ and then slit; a surface of the active material layer was drilled by a laser drilling equipment with a volume fraction of the hole groove being 3%, to obtain the negative electrode sheet.

A preparation process of the electrolyte included the following steps:

40 wt.% of the first organic solvent, 30 wt.% of the second organic solvent, 15 wt.% of lithium salt, and 15 wt.% of additive were mixed and dissolved to prepare the electrolyte.

The electrolyte had a viscosity of 0.806 mPa·s.

A preparation process of the battery included the following steps:

The above-mentioned positive electrode sheet, separator, and negative electrode sheet were wound to prepare a bare cell, which was then packaged and injected with the electrolyte to produce the finished battery.

**Example 6**

The difference between Example 6 and Example 2 included: the compaction density was different. In Example 2, the compaction density was 1.6 g/cm$^3$, while in Example 6, the compaction density was 1.70 g/cm$^3$.

A negative electrode sheet had a structure including:

a current collector;

an active material layer, which was arranged on the surface of the current collector;

the number of the active material layer was 1, and hole grooves were provided on the surface of the active material layer;

a depth H of the hole groove and a thickness T of the active material layer satisfied the following relationship:

$$1/3\,T < H \leq 2/3\,T;$$

the active material layer had a compaction density P of 1.70 g/cm$^3$.

The volume fraction of the hole groove in the active material layer was $\eta$, and $\eta$ was of 3%.

A battery included a positive electrode sheet, a separator, an electrolyte, and the above-mentioned negative electrode sheet.

A preparation method of the positive electrode sheet included the following steps:

an active material LiCoO$_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:

a surface of PE was coated with a ceramic mixture to serve as the separator.

A preparation process of the negative electrode sheet included the following steps:

a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.70 g/cm$^3$ and then slit; a surface of the active material layer was drilled by a laser drilling equipment with a volume fraction of the hole groove being 3%, to obtain the negative electrode sheet.

A preparation process of the electrolyte included the following steps:

40 wt.% of the first organic solvent, 30 wt.% of the second organic solvent, 15 wt.% of lithium salt, and 15 wt.% of additive were mixed and dissolved to prepare the electrolyte.

The electrolyte had a viscosity of 0.806 mPa·s.

A preparation process of the battery included the following steps:

The above-mentioned positive electrode sheet, separator, and negative electrode sheet were wound to prepare a bare cell, which was then packaged and injected with the electrolyte to produce the finished battery.

**Example 7**

The difference between Example 7 and Example 2 included: the compaction density was different. In Example 2, the compaction density was 1.6 g/cm$^3$, while in Example 7, the compaction density was 1.75 g/cm$^3$.

A negative electrode sheet had a structure including:

a current collector;

an active material layer, which was arranged on the surface of the current collector;

the number of the active material layer was 1, and hole grooves were provided on the surface of the active material layer;
a depth H of the hole groove and a thickness T of the active material layer satisfied the following relationship:

$$1/3\,T < H \leq 2/3\,T;$$

the active material layer had a compaction density P of 1.75 g/cm³.

The volume fraction of the hole groove in the active material layer was $\eta$, and $\eta$ was of 3%.

A battery included a positive electrode sheet, a separator, an electrolyte, and the above-mentioned negative electrode sheet.

A preparation method of the positive electrode sheet included the following steps:
an active material $LiCoO_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:
a surface of PE was coated with a ceramic mixture to serve as the separator.

A preparation process of the negative electrode sheet included the following steps:
a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.75 g/cm³ and then slit; a surface of the active material layer was drilled by a laser drilling equipment with a volume fraction of the hole groove being 3%, to obtain the negative electrode sheet.

A preparation process of the electrolyte included the following steps:
40 wt.% of the first organic solvent, 30 wt.% of the second organic solvent, 15 wt.% of lithium salt, and 15 wt.% of additive were mixed and dissolved to prepare the electrolyte.

The electrolyte had a viscosity of 0.806 mPa·s.

A preparation process of the battery included the following steps:
The above-mentioned positive electrode sheet, separator, and negative electrode sheet were wound to prepare a bare cell, which was then packaged and injected with the electrolyte to produce the finished battery.

**Example 8**

The differences between Example 8 and Example 5 included: the amount of the first organic solvent, the amount of the second organic solvent, the concentration of lithium salt, the concentration of additive, and the viscosity of the electrolyte were different. In Example 5, the amount of the first organic solvent was 40 wt.%, the amount of the second organic solvent was 30 wt.%, the concentration of lithium salt was 15 wt.%, the concentration of additive was 15 wt.%, and the viscosity of the electrolyte was 0.806 mPa·s; while in Example 8, the amount of the first organic solvent was 45 wt.%, the amount of the second organic solvent was 40 wt.%, the concentration of lithium salt was 10 wt.%, the concentration of additive was 5 wt.%, and the viscosity of the electrolyte was 0.400 mPa·s.

A negative electrode sheet had a structure including:

a current collector;
an active material layer, which was arranged on the surface of the current collector;
the number of the active material layer was 1, and hole grooves were provided on the surface of the active material layer;
a depth H of the hole groove and a thickness T of the active material layer satisfied the following relationship:

$$1/3\,T < H \leq 2/3\,T;$$

the active material layer had a compaction density P of 1.65 g/cm³.

The volume fraction of the hole groove in the active material layer was $\eta$, and $\eta$ was of 3%.

A battery included a positive electrode sheet, a separator, an electrolyte, and the above-mentioned negative electrode sheet.

A preparation method of the positive electrode sheet included the following steps:

an active material LiCoO$_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:
a surface of PE was coated with a ceramic mixture to serve as the separator.

A preparation process of the negative electrode sheet included the following steps:
a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.65 g/cm$^3$ and then slit; a surface of the active material layer was drilled by a laser drilling equipment with a volume fraction of the hole groove being 3%, to obtain the negative electrode sheet.

A preparation process of the electrolyte included the following steps:
45 wt.% of the first organic solvent, 40 wt.% of the second organic solvent, 10 wt.% of lithium salt, and 5 wt.% of additive were mixed and dissolved to prepare the electrolyte.

The electrolyte had a viscosity of 0.400 mPa·s.

A preparation process of the battery included the following steps:
The above-mentioned positive electrode sheet, separator, and negative electrode sheet were wound to prepare a bare cell, which was then packaged and injected with the electrolyte to produce the finished battery.

**Example 9**

The differences between Example 9 and Example 5 included: the amount of the first organic solvent, the concentration of lithium salt, the concentration of additive, and the viscosity of the electrolyte were different. In Example 5, the amount of the first organic solvent was 40 wt.%, the concentration of lithium salt was 15 wt.%, the concentration of additive was 15 wt.%, and the viscosity of the electrolyte was 0.806 mPa·s; while in Example 9, the amount of the first organic solvent was 30 wt.%, the concentration of lithium salt was 20 wt.%, the concentration of additive was 20 wt.%, and the viscosity of the electrolyte was 2.000 mPa·s.

A negative electrode sheet had a structure including:

a current collector;

an active material layer, which was arranged on the surface of the current collector;

the number of the active material layer was 1, and hole grooves were provided on the surface of the active material layer;

a depth H of the hole groove and a thickness T of the active material layer satisfied the following relationship:

$$1/3T < H \le 2/3T;$$

the active material layer had a compaction density P of 1.65 g/cm$^3$.

The volume fraction of the hole groove in the active material layer was $\eta$, and $\eta$ was of 3%.

A battery included a positive electrode sheet, a separator, an electrolyte, and the above-mentioned negative electrode sheet.

A preparation method of the positive electrode sheet included the following steps:
an active material LiCoO$_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:
a surface of PE was coated with a ceramic mixture to serve as the separator.

A preparation process of the negative electrode sheet included the following steps:
a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.65 g/cm³ and then slit; a surface of the active material layer was drilled by a laser drilling equipment with a volume fraction of the hole groove being 3%, to obtain the negative electrode sheet.

A preparation process of the electrolyte included the following steps:

30 wt.% of the first organic solvent, 30 wt.% of the second organic solvent, 20 wt.% of lithium salt, and 20 wt.% of additive were mixed and dissolved to prepare the electrolyte.

The electrolyte had a viscosity of 2.000 mPa·s.

A preparation process of the battery included the following steps:

The above-mentioned positive electrode sheet, separator, and negative electrode sheet were wound to prepare a bare cell, which was then packaged and injected with the electrolyte to produce the finished battery.

**Example 10**

The differences between Example 10 and Example 9 included: the amount of the first organic solvent, the amount of the second organic solvent, and the viscosity of the electrolyte were different. In Example 9, the amount of the first organic solvent was 30 wt.%, the amount of the second organic solvent was 30 wt.%, and the viscosity of the electrolyte was 2.000 mPa·s; while in Example 10, the amount of the first organic solvent was 45 wt.%, the amount of the second organic solvent was 15 wt.%, and the viscosity of the electrolyte was 1.379 mPa·s.

A negative electrode sheet had a structure including:

a current collector;

an active material layer, which was arranged on the surface of the current collector;

the number of the active material layer was 1, and hole grooves were provided on the surface of the active material layer;

a depth H of the hole groove and a thickness T of the active material layer satisfied the following relationship:

$$1/3T < H \leq 2/3T;$$

the active material layer had a compaction density P of 1.65 g/cm³.

The volume fraction of the hole groove in the active material layer was $\eta$, and $\eta$ was of 3%.

A battery included a positive electrode sheet, a separator, an electrolyte, and the above-mentioned negative electrode sheet.

A preparation method of the positive electrode sheet included the following steps:

an active material $LiCoO_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:

a surface of PE was coated with a ceramic mixture to serve as the separator.

A preparation process of the negative electrode sheet included the following steps:

a negative electrode active material, a conductive agent (a mixture of SP and CNT at a mass ratio of 0.45:0.05), and a binder (a mixture of SBR and PAALi at a mass ratio of 0.5:1.8) at a weight ratio of 97.7: 1.1: 1.2 were mixed to prepare a negative electrode active material slurry, the slurry was uniformly coated onto a composite current collector, the composite current collector was cold pressed at a compaction density of 1.65 g/cm³ and then slit; a surface of the active material layer was drilled by a laser drilling equipment with a volume fraction of the hole groove being 3%, to obtain the negative electrode sheet.

A preparation process of the electrolyte included the following steps:

45 wt.% of the first organic solvent, 15 wt.% of the second organic solvent, 20 wt.% of lithium salt, and 20 wt.% of additive were mixed and dissolved to prepare the electrolyte.

The electrolyte had a viscosity of 1.379 mPa·s.

A preparation process of the battery included the following steps:

The above-mentioned positive electrode sheet, separator, and negative electrode sheet were wound to prepare a bare cell, which was then packaged and injected with the electrolyte to produce the finished battery.

## Example 11

The difference between Example 11 and Example 10 included: the pressure relief compaction density was different. In Example 10, the pressure relief compaction density was 1.44 g/cm$^3$, while in Example 11, the pressure relief compaction density was 1.48 g/cm$^3$.

A negative electrode sheet had a structure including:

a current collector;
an active material layer, which was arranged on the surface of the current collector;
the number of the active material layer was 1, and hole grooves were provided on the surface of the active material layer;
a depth H of the hole groove and a thickness T of the active material layer satisfied the following relationship:

$$1/3T < H \leq 2/3T;$$

the active material layer had a compaction density P of 1.65 g/cm$^3$.

The volume fraction of the hole groove in the active material layer was $\eta$, and $\eta$ was of 3%.

A battery included a positive electrode sheet, a separator, an electrolyte, and the above-mentioned negative electrode sheet.

A preparation method of the positive electrode sheet included the following steps:

an active material LiCoO$_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:

a surface of PE was coated with a ceramic mixture to serve as the separator.

A preparation process of the negative electrode sheet included the following steps:

the negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.65 g/cm$^3$ and then slit; a surface of the active material layer was drilled by a laser drilling equipment with a volume fraction of the hole groove being 3%, to obtain the negative electrode sheet.

A preparation process of the electrolyte included the following steps:

45 wt.% of the first organic solvent, 15 wt.% of the second organic solvent, 20 wt.% of lithium salt, and 20 wt.% of additive were mixed and dissolved to prepare the electrolyte.

The electrolyte had a viscosity of 1.379 mPa·s.

A preparation process of the battery included the following steps:

The above-mentioned positive electrode sheet, separator, and negative electrode sheet were wound to prepare a bare cell, which is then packaged and injected with the electrolyte to produce the finished battery.

## Example 12

The difference between Example 12 and Example 10 included: the volume fraction of the hole groove was different. In Example 10, the volume fraction of the hole groove was 3%, while in Example 12, the volume fraction of the hole groove was 1%.

A negative electrode sheet had a structure including:

a current collector;
an active material layer, which was arranged on the surface of the current collector;
the number of the active material layer was 1, and hole grooves were provided on the surface of the active material layer;
a depth H of the hole groove and a thickness T of the active material layer satisfied the following relationship:

$$1/3T < H \leq 2/3T;$$

the active material layer had a compaction density P of 1.65 g/cm$^3$.

The volume fraction of the hole groove in the active material layer was $\eta$, and $\eta$ was of 1%.

A battery included a positive electrode sheet, a separator, an electrolyte, and the above-mentioned negative electrode sheet.

A preparation method of the positive electrode sheet included the following steps:

an active material LiCoO$_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:

a surface of PE was coated with a ceramic mixture to serve as the separator.

A preparation process of the negative electrode sheet included the following steps:

a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.65 g/cm$^3$ and then slit; a surface of the active material layer was drilled by a laser drilling equipment with a volume fraction of the hole groove being 1%, to obtain the negative electrode sheet.

A preparation process of the electrolyte included the following steps:

45 wt.% of the first organic solvent, 15 wt.% of the second organic solvent, 20 wt.% of lithium salt, and 20 wt.% of additive were mixed and dissolved to prepare the electrolyte.

The electrolyte had a viscosity of 1.379 mPa·s.

A preparation process of the battery included the following steps:

The above-mentioned positive electrode sheet, separator, and negative electrode sheet were wound to prepare a bare cell, which was then packaged and injected with the electrolyte to produce the finished battery.

**Example 13**

The differences between Example 13 and Example 7 were: the mass percentage of the first organic solvent, the concentration of lithium salt, the concentration of additive, and the viscosity of the electrolyte were different. In Example 7, the mass percentage of the first organic solvent was 40 wt.%, the concentration of lithium salt was 15 wt.%, the concentration of additive was 15 wt.%, and the viscosity of the electrolyte was 0.806 mPa·s; while in Example 13, the mass percentage of the first organic solvent was 30 wt.%, the concentration of lithium salt was 20 wt.%, the concentration of additive was 20 wt.%, and the viscosity of the electrolyte was 2.000 mPa·s.

A negative electrode sheet had a structure including:

a current collector;

an active material layer, which was arranged on the surface of the current collector;

the number of the active material layer was 1, and hole grooves were provided on the surface of the active material layer;

a depth H of the hole groove and a thickness T of the active material layer satisfied the following relationship:

$$1/3T < H \le 2/3T;$$

the active material layer had a compaction density P of 1.75 g/cm$^3$.

The volume fraction of the hole groove in the active material layer was $\eta$, and $\eta$ was of 3%.

A battery included a positive electrode sheet, a separator, an electrolyte, and the above-mentioned negative electrode sheet.

A preparation method of the positive electrode sheet included the following steps:

an active material LiCoO$_2$, a conductive agent acetylene black, a conductive carbon nanotube, and a binder polyvinylidene fluoride (PVDF) were fully dispersed in an N-methyl-2-pyrrolidone solvent system at a weight ratio of 97.6: 0.5: 0.6: 1.3, then a resulting mixture was uniformly coated onto an aluminum current collector, followed treated by cold pressing and slitting to obtain the positive electrode sheet.

A preparation method of the separator included the following steps:

a surface of PE was coated with a ceramic mixture to serve as the separator.

A preparation process of the negative electrode sheet included the following steps:

a negative electrode active material, a conductive agent (a mixture of SP and CNT at a mass ratio of 0.45: 0.05), and a binder (a mixture of SBR and PAALi at a mass ratio of 0.5: 1.8) at a weight ratio of 97.7: 1.1: 1.2 were mixed to prepare a negative electrode active material slurry, the slurry was uniformly coated onto a composite current collector, the composite current collector was cold pressed at a compaction density of 1.75 g/cm$^3$ and then slit; a surface of the active material layer was drilled by a laser drilling equipment with a volume fraction of the hole groove being 3%, to obtain the negative electrode sheet.

A preparation process of the electrolyte included the following steps:

30 wt.% of the first organic solvent, 30 wt.% of the second organic solvent, 20 wt.% of lithium salt, and 20 wt.% of additive were mixed and dissolved to prepare the electrolyte.

The electrolyte had a viscosity of 2.000 mPa·s.

A preparation process of the battery included the following steps:

The above-mentioned positive electrode sheet, separator, and negative electrode sheet were wound to prepare a bare cell, which was then packaged and injected with the electrolyte to produce the finished battery.

**Comparative Example 1**

The difference between Comparative Example 1 and Example 5 included: there was no hole groove in the active material layer of Comparative Example 1.

**Comparative Example 2**

The differences between Comparative Example 2 and Example 9 included: the amount of the first organic solvent, the amount of the second organic solvent, and the viscosity of the electrolyte were different. In Example 9, the amount of the first organic solvent was 30 wt.%, the amount of the second organic solvent was 30 wt.%, and the viscosity of the electrolyte was 2.000 mPa·s; while in Comparative Example 2, the amount of the first organic solvent was 25 wt.%, the amount of the second organic solvent was 35 wt.%, and the viscosity of the electrolyte was 2.291 mPa·s.

**Comparative Example 3**

The difference between Comparative Example 3 and Example 5 included: the pressure relief compaction density was different. In Example 5, the pressure relief compaction density was 1.44 g/cm$^3$, while in Comparative Example 3, the pressure relief compaction density was 1.60 g/cm$^3$.

**Comparative Example 4**

The difference between Comparative Example 4 and Example 5 included: the volume fraction of the hole groove was different. In Example 5, the volume fraction of the hole groove was 3%, while in Comparative Example 4, the volume fraction of the hole groove was 6%.

The parameter settings of Examples 1-13 and Comparative Examples 1-4 were shown in Table 1-Table 2.

Table 1

| | Compaction density P/g/cm$^3$ | Pressure relief compaction density β/g/cm$^3$ | Volume fraction of hole groove η/% | First organic solvent $W_1$/wt.% | Second organic solvent $W_2$/wt.% | Concentration of lithium salt /wt.% | Concentration of additive /wt.% | Viscosity of electrolyte ω/mPa·s |
|---|---|---|---|---|---|---|---|---|
| Example 1 | 1.60 | 1.42 | 1 | 40 | 30 | 15 | 15 | 0.806 |
| Example 2 | 1.60 | 1.42 | 3 | 40 | 30 | 15 | 15 | 0.806 |
| Example 3 | 1.60 | 1.42 | 5 | 40 | 30 | 15 | 15 | 0.806 |
| Example 4 | 1.55 | 1.37 | 3 | 40 | 30 | 15 | 15 | 0.806 |
| Example 5 | 1.65 | 1.44 | 3 | 40 | 30 | 15 | 15 | 0.806 |
| Example 6 | 1.70 | 1.48 | 3 | 40 | 30 | 15 | 15 | 0.806 |
| Example 7 | 1.75 | 1.52 | 3 | 40 | 30 | 15 | 15 | 0.806 |
| Example 8 | 1.65 | 1.44 | 3 | 45 | 40 | 10 | 5 | 0.400 |

(continued)

|  | Compaction density P/g/cm³ | Pressure relief compaction density β/g/cm³ | Volume fraction of hole groove η/% | First organic solvent W₁/wt. % | Second organic solvent W₂/wt.% | Concentration of lithium salt /wt. % | Concentration of additive /wt.% | Viscosity of electrolyte ω/mPa·s |
|---|---|---|---|---|---|---|---|---|
| Example 9 | 1.65 | 1.44 | 3 | 30 | 30 | 20 | 20 | 2.000 |
| Example 10 | 1.65 | 1.44 | 3 | 45 | 15 | 20 | 20 | 1.379 |
| Example 11 | 1.65 | 1.48 | 3 | 45 | 15 | 20 | 20 | 1.379 |
| Example 12 | 1.65 | 1.44 | 1 | 45 | 15 | 20 | 20 | 1.379 |
| Example 13 | 1.75 | 1.52 | 3 | 30 | 30 | 20 | 20 | 2.000 |
| Comparative Example 1 | 1.65 | 1.44 | 0 | 40 | 30 | 15 | 15 | 0.806 |
| Comparative Example 2 | 1.65 | 1.44 | 3 | 25 | 35 | 20 | 20 | 2.291 |
| Comparative Example 3 | 1.65 | 1.60 | 3 | 40 | 30 | 15 | 15 | 0.806 |
| Comparative Example 4 | 1.65 | 1.44 | 6 | 40 | 30 | 15 | 15 | 0.806 |

In Table 1, the values of the first organic solvent $W_1$, the second organic solvent $W_2$, the concentration of lithium salt and the concentration of additive mainly affected the viscosity $\omega$ of the electrolyte.

Table 2

|  | Thickness T of active material layer /μm | Depth H of the hole groove /μm | Drilling width R of the hole groove /μm | Spacing L of the hole groove /mm | Angle θ between the hole groove and the negative electrode sheet /° |
|---|---|---|---|---|---|
| Example 1 | 32.5 | 1/3T | 50 | 1.65 | 90 |
| Example 2 | 32.5 | 1/2T | 105 | 1.65 | 90 |
| Example 3 | 32.5 | 2/3T | 140 | 1.65 | 90 |
| Example 4 | 34.2 | 1/2T | 100 | 1.65 | 90 |
| Example 5 | 30.8 | 1/2T | 105 | 1.65 | 90 |
| Example 6 | 29.3 | 1/2T | 100 | 1.65 | 90 |
| Example 7 | 27.7 | 1/2T | 100 | 1.65 | 90 |
| Example 8 | 30.8 | 1/2T | 105 | 1.65 | 90 |
| Example 9 | 30.8 | 1/2T | 105 | 1.65 | 90 |
| Example 10 | 30.8 | 1/2T | 105 | 1.65 | 90 |
| Example 11 | 30.8 | 1/2T | 105 | 1.65 | 90 |
| Example 12 | 30.8 | 1/3T | 50 | 1.65 | 90 |
| Example 13 | 27.7 | 1/2T | 105 | 1.65 | 90 |
| Comparative Example 1 | 30.8 | / | / | / | / |
| Comparative Example 2 | 30.8 | 1/2T | 105 | 1.65 | 90 |
| Comparative Example 3 | 27.7 | 1/2T | 105 | 1.65 | 90 |
| Comparative Example 4 | 30.8 | 3/4T | 145 | 1.65 | 90 |

The parameters in Table 2 mainly were the parameters of the hole groove, which affected the volume fraction η of the hole groove in Table 1. When adjusting the parameters in Table 2, it would impact the corresponding volume fraction η of the hole groove in Table 1.

From the parameters in Table 1, it was calculated whether P, η, $W_1$, and ω satisfy the following relationship: $2.8 \leq (P*ω)/(10*η*W_1) \leq 50$; and it was calculated whether β, P, and ω satisfy the following relationship: $0.05 \leq ω*(P-β)/P \leq 0.23$. The calculation results were shown in Table 3.

Table 3

| | $2.8 \leq (P*ω)/(20*η*W_1) \leq 50$ | $0.05 \leq ω*(P-β)/P \leq 0.23$ |
|---|---|---|
| Example 1 | 32.2 | 0.09 |
| Example 2 | 10.7 | 0.09 |
| Example 3 | 6.4 | 0.09 |
| Example 4 | 10.4 | 0.09 |
| Example 5 | 11.1 | 0.10 |
| Example 6 | 11.4 | 0.10 |
| Example 7 | 11.8 | 0.11 |
| Example 8 | 4.9 | 0.05 |
| Example 9 | 36.6 | 0.25 |
| Example 10 | 16.9 | 0.18 |
| Example 11 | 17.9 | 0.14 |
| Example 12 | 76.8 | 0.18 |
| Example 13 | 38.9 | 0.26 |
| Comparative Example 1 | / | 0.10 |
| Comparative Example 2 | 50.4 | 0.29 |
| Comparative Example 3 | 11.8 | 0.02 |
| Comparative Example 4 | 5.5 | 0.10 |

From Table 3, it can be seen that Example 12, Comparative Example 1, and Comparative Example 2 do not satisfy $2.8 \leq (P*ω)/(10*η*W_1) \leq 50$; Example 13, Comparative Example 1, Comparative Example 2, and Comparative Example 3 do not satisfy $0.05 \leq ω*(P-β)/P \leq 0.23$.

**Performance Testing:**

For the batteries prepared from Examples 1-13 and Comparative Examples 1-4, the following tests were conducted, and the results were shown in Table 4.

Pressure relief compaction density: weighing 1.00 g ± 0.05 g of negative electrode active material powder, then placing the sample in a powder compaction density meter, with a testing pressure of 5 tons. A pressure relief compaction density was β, a mass of the negative electrode active material was M, a force area of the negative electrode active material was S, and a thickness of the powder sample after pressure relief was H. The pressure relief compaction density had a calculation formula as follows: $β = M / (S \times H)$.

Liquid retention range: after a period of vacuum drying, the battery was injected with electrolyte, and the initial injection amount was recorded. After a period of electrolyte wetting treatment, the excess electrolyte inside the battery was extracted, and the amount of electrolyte extracted was recorded. Therefore, the liquid retention capacity was a difference between injection amount and electrolyte extraction amount, with a sample size of 100 batteries.

Cycle testing method:

Under 25°C/45°C condition, cycle tests were conducted according to the following method. Charging protocol: 3.5C CC-4.25V, 2.8C CC-4.35V, CV-1.8C, 1.8C CC-4.4V, CV-1.5C, 1.5C CC-4.5V, CV-1.2C, 1.2C CC-4.55V, CV-0.26C. Discharging protocol: 0.7C DC-3.0V.

The capacity retention rate after 500 cycles = discharge capacity in the 500th cycle / discharge capacity in the 1st cycle * 100%.

The capacity retention rate after 300 cycles = discharge capacity in the 300th cycle / discharge capacity in the 1st cycle * 100%.

Low temperature discharge test at -10°C: under 25°C condition, charging at 0.5C to 4.5V, with a cutoff current of 0.02C, resting for 5 minutes, and discharging at 0.2C to 3.0V; then charging at 0.5C to 4.5V, with a cutoff current of 0.02C; setting the test temperature to -10°C, resting for 120 minutes, and discharging at 0.2C to 3.0V.

Low temperature discharge capacity ratio = discharge capacity at -10°C / discharge capacity at 25°C * 100%.

Table 4

|  | Difference of liquid retention range /g | Average value of liquid retention | Liquid retention range /g | Capacity retention rate after 500 cycles at 25°C /% | Capacity retention rate after 300 cycles at 45°C /% | Low temperature discharge at -10°C /% |
|---|---|---|---|---|---|---|
| Example 1 | 0.23 | 7.99 | 7.88~8.11 | 91.6 | 92.7 | 90.2 |
| Example 2 | 0.22 | 8.01 | 7.94~8.16 | 92.5 | 93.1 | 91.1 |
| Example 3 | 0.27 | 8.25 | 8.11~8.38 | 93.1 | 93.6 | 91.9 |
| Example 4 | 0.25 | 8.05 | 7.96~8.21 | 93.2 | 93.3 | 91.2 |
| Example 5 | 0.24 | 8.02 | 7.88~8.12 | 92.7 | 92.6 | 91.0 |
| Example 6 | 0.27 | 7.89 | 7.75~8.02 | 91.7 | 91.8 | 90.9 |
| Example 7 | 0.39 | 7.84 | 7.69~7.98 | 91.2 | 91.1 | 90.5 |
| Example 8 | 0.28 | 8.11 | 7.98~8.26 | 92.8 | 90.5 | 90.8 |
| Example 9 | 0.40 | 7.72 | 7.59~7.84 | 90.3 | 91.0 | 89.9 |
| Example 10 | 0.36 | 7.76 | 7.63~7.91 | 91.3 | 91.8 | 90.2 |
| Example 11 | 0.39 | 7.74 | 7.72~7.90 | 91.1 | 91.5 | 90.0 |
| Example 12 | 0.93 | 7.32 | 6.84~7.77 | 85.3 | 84.8 | 83.9 |
| Example 13 | 0.86 | 7.45 | 7.01~7.87 | 84.4 | 86.5 | 82.9 |
| Comparative Example 1 | 1.59 | 6.87 | 6.01~7.6 | 79.0 | 79.7 | 78.7 |
| Comparative Example 2 | 1.52 | 6.77 | 6.13~7.65 | 81.4 | 81.6 | 79.8 |
| Comparative Example 3 | 1.05 | 7.36 | 6.83~7.88 | 81.9 | 82.4 | 78.7 |
| Comparative Example 4 | 0.83 | 7.55 | 7.13~7.96 | 81.3 | 82.8 | 80.1 |

From Example 1 to Example 10, it can be seen that when the battery parameters P, $\omega$, $\eta$, $W_1$, and $\beta$ satisfy the relationships: $2.8 \leq (P*\omega)/(10*\eta*W_1) \leq 50$, and $0.05 \leq \omega*(P-\beta)/P \leq 0.23$, and each parameter is within the scope of the present disclosure, the battery exhibits more stable liquid retention capability, as well as superior high and low temperature performance. This expands the selection window for electrolyte types, ensuring good liquid retention stability while balancing the comprehensive performance at high temperature and low temperature. When the parameters do not satisfy the above relationship ranges, the liquid retention of the electrolyte is unstable, and the high and low temperature performances are poor.

From Example 1 to Example 10 and Comparative Example 1 to Comparative Example 4, it can be seen that providing hole grooves on the surface of the electrode sheets is beneficial for achieving good liquid retention stability, while also providing pathways for rapid lithium ion transport. Therefore, providing hole grooves on the surface of the electrode sheets under high compaction density can appropriately increase the viscosity of the electrolyte, thereby allowing the electrode sheets to maintain good liquid retention stability and exhibit superior performance at high or low temperature. If drilling is not performed, the stability and average value of the liquid retention of the electrolyte significantly decrease, and the high and low temperature performance deteriorates severely. If the volume fraction of the hole groove of the negative electrode sheet is too high, it will affect the N/P ratio of the positive electrode and the negative electrode, leading to a significant decrease in the high temperature cycling life and low temperature cycling life. A high volume fraction of the hole groove results in a substantial reduction in active material and a greater amount of free electrolyte stored in the hole groove. During vacuum extraction of excess electrolyte, a considerable amount of electrolyte is lost, which also leads to unstable liquid retention.

From Example 1 to Example 10 and Comparative Example 2, it can be seen that low viscosity results in poor high temperature performance, it is mainly because that low viscosity exacerbates side reactions at high temperature. If the viscosity is too high, the excessive viscosity of the electrolyte hinders lithium ion conduction, making lithium precipitation easier and reducing wettability, which adversely affects liquid retention stability, low temperature discharge performance, and high and low temperature cycling performance.

From Example 1 to Example 10 and Comparative Example 3, it can be seen that when the pressure relief compaction density is in a range of 1.37 $g/cm^3$ to 1.52 $g/cm^3$, the contact between the materials in the active material layer is well, the structural stability of the active material is high, and the gaps between particles are fixed. This is beneficial for enhancing the stability of the liquid retention capacity of the electrolyte, further cooperating with the compaction density and electrolyte viscosity to improve the stability of the liquid retention capacity and the high and low temperature cycling performance. When the pressure relief compaction density is too high, the structural stability of the active material decreases, leading to reduced liquid retention stability and high and low temperature performance.

From Example 1 to Example 12, it can be seen that if the parameters P, $\omega$, $\eta$, and $W_1$ are within the scope of the present disclosure but do not satisfy the relationship: $2.8 \leq (P*\omega)/(10*\eta*W_1) \leq 50$, the liquid retention stability and the high and low temperature cycling performance will also decrease. The parameters P, $\omega$, $\eta$, and $W_1$ need to cooperate with each other to improve the liquid retention stability of the electrolyte and enhance the high and low temperature cycling performance.

From Example 1 to Example 13, it can be seen that if the parameters P, $\omega$, and $\beta$ are within the scope of the present disclosure but do not satisfy the relationship: $0.05 \leq \omega*(P-\beta)/P \leq 0.23$, the liquid retention stability and the high and low temperature cycling performance will also decrease. The parameters P, $\omega$, and $\beta$ need to cooperate with each other to enhance the liquid retention stability of the electrolyte and enhance the high and low temperature cycling performance.

In the present solution, the hole groove on the surface of the active layer of the positive electrode sheet not only facilitate the circulation of the electrolyte, effectively enhancing the wettability of the highly compacted electrode sheets, but also reduce the permeability requirements of the highly compacted electrode sheets for the electrolyte. This broadens the selection types and ratio window for solvents and additives. Furthermore, it can form pathways for rapid lithium ion transport, alleviating the issue of lithium ion precipitation caused by low porosity in highly compacted electrode sheets. Based on the volume fraction of the hole groove of the active material layer of the positive electrode sheet, and while ensuring wettability, appropriate adjustments can be made to the solvent ratio of the electrolyte. This can help balance the high and low temperature performance of the battery and overall enhance the comprehensive capability of the battery to meet market demands.

The above is only an embodiment of the present disclosure and does not limit the scope of the patent. Any equivalent transformations made using the content of the present disclosure, or direct or indirect applications in related technical fields, are similarly included within the scope of the present disclosure.

**Claims**

1. A negative electrode sheet, **characterized in that** the negative electrode sheet has a structure comprising:

     a current collector;
     an active material layer arranged on a surface of the current collector;
     the quantity of active material layer is greater than or equal to 1, and a surface of at least one active material layer is provided with a hole groove;
     a depth H of the hole groove and a thickness T of the active material layer satisfy the following relationship:

$$1/3T < H \leq 2/3T;$$

     the active material layer has a compaction density P satisfying the following relationship: $1.55$ $g/cm^3 \leq P \leq 1.75$ $g/cm^3$.

2. The negative electrode sheet of claim 1, wherein a volume fraction of the hole groove in the active material layer is $\eta$, and $\eta$ satisfies the following relationship: $1\% \leq \eta \leq 5\%$.

3. The negative electrode sheet of claim 1, wherein the hole groove in the active material layer has a drilling width R satisfying the following relationship: $50 \, \mu m \leq R \leq 140 \, \mu m$.

4. The negative electrode sheet of claim 1, wherein the hole groove in the active material layer has a spacing L satisfying the following relationship: $1.0 \, mm \leq L \leq 2.5 \, mm$.

5. The negative electrode sheet of claim 1, wherein an angle between the hole groove in the active material layer and the negative electrode sheet is $\theta$, and $\theta$ satisfies the following relationship: $85° \leq \theta \leq 95°$.

6. A battery, **characterized by** comprising a positive electrode sheet, a separator, an electrolyte, and the negative electrode sheet according to any of claims 1 to 5.

7. The battery of claim 6, wherein components of the electrolyte comprise a non-aqueous solvent, a lithium salt, and an additive, wherein the non-aqueous solvent comprises a first organic solvent and a second organic solvent; a mass fraction of the first organic solvent in the electrolyte is $W_1$, and $W_1$ satisfies the following relationship: $30 \, wt.\% \leq W_1 \leq 45 \, wt.\%$; a mass fraction of the second organic solvent in the electrolyte is $W_2$, and $W_2$ satisfies the following relationship: $15 \, wt.\% \leq W_2 \leq 40 \, wt.\%$; and $W_2 \leq W_1 \leq 3W_2$.

8. The battery of claim 7, wherein the electrolyte has a viscosity $\omega$ satisfying the following relationship: $0.4 \, mPa\cdot s \leq \omega \leq 2 \, mPa\cdot s$.

9. The battery of claim 8, wherein a compaction density of the negative electrode sheet is P; and the negative electrode sheet comprises an active material layer, and the active material layer is provided with a hole groove, the hole groove has a volume fraction $\eta$; and P, $\eta$, $W_1$, and $\omega$ satisfy the following relationship: $2.8 \leq (P*\omega)/(10*\eta*W_1) \leq 50$.

10. The battery of claim 8, wherein the negative electrode sheet has a pressure relief compaction density $\beta$ satisfying: $1.37 \, g/cm^3 \leq \beta \leq 1.52 \, g/cm^3$.

11. The battery of claim 8, wherein the pressure relief compaction density $\beta$ of the negative electrode sheet, the compaction density P of the negative electrode sheet, and the viscosity $\omega$ of the electrolyte satisfy the following relationship: $0.05 \leq \omega * (P - \beta) / P \leq 0.23$.

12. The battery of claim 7, wherein the first organic solvent comprises at least one of carbonate organic solvent and carboxylate organic solvent; the second organic solvent comprises at least one of sulfur-based solvent, fluorinated solvent, sulfone-based solvent, and nitrile-based solvent.

Figure 1

## INTERNATIONAL SEARCH REPORT

| International application No. |
| --- |
| **PCT/CN2023/142774** |

**A. CLASSIFICATION OF SUBJECT MATTER**

H01M4/13(2010.01)i; H01M10/0569(2010.01)i; H01M10/0525(2010.01)i

According to International Patent Classification (IPC) or to both national classification and IPC

**B. FIELDS SEARCHED**

Minimum documentation searched (classification system followed by classification symbols)

H01M4/-; H01M10/-

Documentation searched other than minimum documentation to the extent that such documents are included in the fields searched

Electronic data base consulted during the international search (name of data base and, where practicable, search terms used)

CNTXT, CNKI, ENTXT, VCN, DWPI: 沟, 孔, 槽, 负极, 阳极, 激光, 保液, 浸润, 润湿, 泄压压实密度, 电解液, 第一, 第二, 有机, trench? , pore? , cell? , gap?, negative electrode, anode, laser, liquid retention, wetting, pressure reli+, compacted density, electrolyte, first, second, organic

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117832384 A (HUIZHOU LIWINON NEW ENERGY TECHNOLOGY CO., LTD.) 05 April 2024 (2024-04-05) description, embodiment 1 | 1-12 |
| X | CN 217134409 U (BYD CO., LTD.) 05 August 2022 (2022-08-05) description, paragraphs 10 and 46, and embodiment 1 | 1-6 |
| Y | CN 217134409 U (BYD CO., LTD.) 05 August 2022 (2022-08-05) description, paragraphs 10 and 46, and embodiment 1 | 7-12 |
| Y | CN 112420998 A (NINGDE CONTEMPORARY AMPEREX TECHNOLOGY CO., LTD.) 26 February 2021 (2021-02-26) claim 10, and description, paragraphs 46-63 | 7-12 |
| Y | CN 117059763 A (NINGDE AMPEREX TECHNOLOGY LTD.) 14 November 2023 (2023-11-14) description, paragraph 5 | 10-11 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 August 2024** | **21 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2023/142774** |

**C.    DOCUMENTS CONSIDERED TO BE RELEVANT**

| Category* | Citation of document, with indication, where appropriate, of the relevant passages | Relevant to claim No. |
|---|---|---|
| A | CN 112968148 A (SUNWODA ELECTRIC VEHICLE BATTERY CO., LTD.) 15 June 2021 (2021-06-15)<br>entire document | 1-12 |
| A | JP 2016058375 A (MITSUBISHI MATERIALS CORP.) 21 April 2016 (2016-04-21)<br>entire document | 1-12 |

Form PCT/ISA/210 (second sheet) (July 2022)

**INTERNATIONAL SEARCH REPORT**
Information on patent family members

| International application No. |
| --- |
| **PCT/CN2023/142774** |

| Patent document cited in search report | | | Publication date (day/month/year) | Patent family member(s) | | | Publication date (day/month/year) |
| --- | --- | --- | --- | --- | --- | --- | --- |
| CN | 117832384 | A | 05 April 2024 | None | | | |
| CN | 217134409 | U | 05 August 2022 | None | | | |
| CN | 112420998 | A | 26 February 2021 | WO | 2021031956 | A1 | 25 February 2021 |
| | | | | EP | 3951944 | A1 | 09 February 2022 |
| | | | | CN | 112420998 | B | 01 March 2022 |
| | | | | US | 2022123368 | A1 | 21 April 2022 |
| | | | | EP | 3951944 | A4 | 15 June 2022 |
| | | | | EP | 3951944 | B1 | 03 May 2023 |
| CN | 117059763 | A | 14 November 2023 | None | | | |
| CN | 112968148 | A | 15 June 2021 | None | | | |
| JP | 2016058375 | A | 21 April 2016 | JP | 5983822 | B2 | 06 September 2016 |

Form PCT/ISA/210 (patent family annex) (July 2022)